(19) **Europäisches Patentamt / European Patent Office / Office européen des brevets**

(11) **EP 1 772 743 A1**

(12) # DEMANDE DE BREVET EUROPEEN

(43) Date de publication:
**11.04.2007 Bulletin 2007/15**

(21) Numéro de dépôt: **06120017.6**

(22) Date de dépôt: **01.09.2006**

(51) Int Cl.:
*G01S 3/786* [(2006.01)] *F41G 7/22* [(2006.01)]
*F41G 3/14* [(2006.01)]

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **02.09.2005 FR 0509000**

(71) Demandeur: **SAGEM DEFENSE SECURITE SA 75015 Paris (FR)**

(72) Inventeur: **Richard, Yves 75015, PARIS (FR)**

(74) Mandataire: **Callon de Lamarck, Jean-Robert et al Cabinet Régimbeau 20, rue de Chazelles 75847 Paris cedex 17 (FR)**

(54) **Procédé de détection d'un objet par traitement spatio-temporel et dispositif de mise en oeuvre du procédé**

(57)  L'invention concerne un procédé de détection d'un objet (15) situé dans un champ optique (16) d'un système optronique (11), caractérisé en ce qu'il comporte les étapes selon lesquelles :
- des moyens de traitement (12) déterminent un spectre spatio-temporel à partir d'un signal issu du système optronique (11) ;
- un filtre spatio-temporel crée des zones de recherche dans le spectre spatio-temporel pour éliminer les basses fréquences spatiales et les basses fréquences temporelles et ;
- des moyens de détection (18) détectent dans les zones de recherche des zones d'alarmes dont une magnitude de spectre est supérieure à un seuil prédéterminé, ces zones d'alarmes correspondant à une détection possible de l'objet (15).

Elle concerne également un dispositif de détection mettant en oeuvre le procédé.

FIG_1

**EP 1 772 743 A1**

**Description**

DOMAINE TECHNIQUE GENERAL

La présente invention concerne un procédé de détection d'un objet situé dans un champ optique d'un système optronique.

Elle concerne également un dispositif de détection mettant en oeuvre le procédé.

ETAT DE L'ART

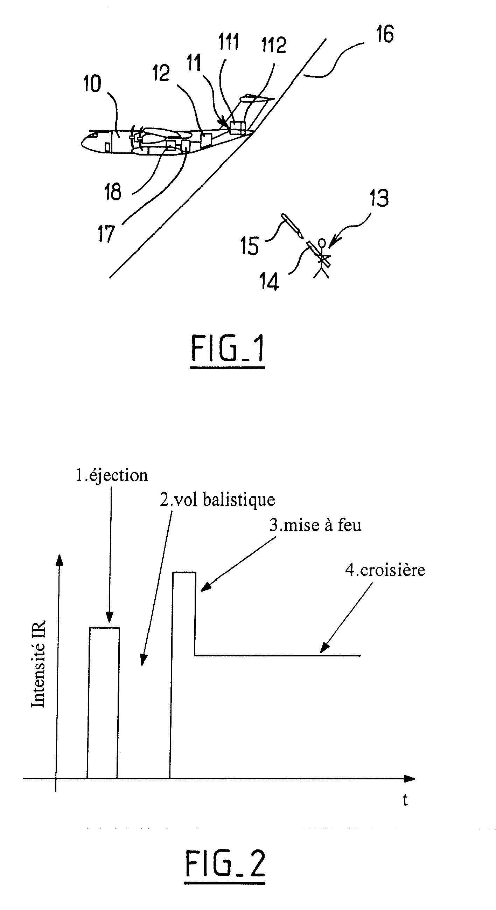

Comme le montre la figure 1, la détection de missiles, dans le cadre de l'autoprotection des avions 10 de transport ou de chasse, se situe dans le cadre général de la détection d'un objet 15 quasi ponctuel par un système optronique 11 monté sur les avions 10.

En général, le système optronique 11 est un imageur, composé d'une optique 112 et d'un détecteur matriciel 111.

Pour être efficace, la détection des missiles 15 doit être omnidirectionnelle.

Il en résulte tout d'abord que pour diminuer le nombre de systèmes optroniques 11, un champ 16 de l'optique 112 est le plus grand possible. La résolution du système en subit les conséquences : du point de vue de l'imagerie, la scène est en générale sous résolue.

Il en résulte ensuite que la détection doit s'opérer sur tous types de fonds, à savoir des fonds uniformes de type « ciel clair », des fonds de ciel structurés ou nuageux, ou des fonds de sols urbains, ruraux ou naturels.

Les missiles 15 devant être détectés sont des missiles sol-air ou air-air. Ce sont des objets quasi ponctuels par rapport à l'avion 10 ou à l'environnement observé dans le champ 16, et fortement mobiles dans le référentiel terrestre. Leur vitesse est de l'ordre de Mach 2,5.

Le profil temporel de l'émission infrarouge de ces missiles est constitué de plusieurs phases, qui correspondent à différentes phases de vol.

Dans le cas des missiles SATCP (Sol Air Très Courte Portée), la figure 2 montre que le profil temporel de l'émission comporte :

- une phase 1 d'éjection du missile 15 d'un tube 14 (pour les missiles 15 SATCP tirés par un fantassin 13),
- une courte phase 2 de vol balistique (quelques centaines de ms),
- une mise à feu 3 d'un réacteur du missile (ou « over shoot » selon la terminologie anglo-saxonne généralement utilisée par l'homme du métier),
- une phase 4 de propulsion ou de croisière, elle-même décomposée en plusieurs phases suivant les modèles de missile.

À la suite de son éjection 1, le missile 15 possède une vitesse de l'ordre de 50 m/s. Puis le missile 15 subit une forte accélération (de 30 à 50 g) pendant 1 à 2 secondes (phase 3), pour le mener à une vitesse de l'ordre de 500 à 700 m/s (phase 4). Cette vitesse est maintenue plus ou moins constante pendant 5 à 15 secondes.

Avec des dispositifs SATCP, quelques secondes seulement séparent l'éjection 1 du missile 15 de son impact avec l'avion 10, si ce dernier ne déclenche pas de dispositifs de contre-mesure à temps.

Par conséquent, il est nécessaire de détecter le missile 15 le plus tôt possible pour que l'avion 10 puisse déclencher ses dispositifs de contre-mesure.

Actuellement, les systèmes optroniques ne détectent pas le missile au plus tôt et ne sont pas optimaux.

PRESENTATION DE L'INVENTION

L'invention propose de pallier au moins un de ces inconvénients.

A cet effet, on propose selon l'invention un procédé de détection d'un objet situé dans un champ optique d'un système optronique, caractérisé en ce qu'il comporte les étapes selon lesquelles :

- des moyens de traitement déterminent un spectre spatio-temporel à partir d'un signal issu du système optronique ;
- un filtre spatio-temporel crée des zones de recherche dans le spectre spatio-temporel pour éliminer les basses fréquences spatiales et les basses fréquences temporelles et ;
- des moyens de détection détectent dans les zones de recherche des zones d'alarmes dont une magnitude de spectre est supérieure à un seuil prédéterminé, ces zones d'alarmes correspondant à une détection possible de l'objet.

L'invention est avantageusement complétée par les caractéristiques suivantes, prises seules ou en une quelconque de leur combinaison techniquement possible :

- le filtre spatio-temporel crée des zones de recherche dans le spectre spatio-temporel en effectuant les étapes suivantes :

- un filtrage d'un signal issu du système optronique par un filtre morphologique non linéaire ;
- un filtrage du signal issu du filtre morphologique non linéaire par un filtre spatial passe-bas ;
- un filtrage du signal issu du filtre spatial passe-bas par un filtre morphologique non linéaire ;
- l'étape de filtrage du signal issu du système optronique par le filtre morphologique non linéaire et l'étape de filtrage du signal issu du filtre morphologique non linéaire par le filtre spatial passe-bas sont itérées une pluralité de fois ;
- le nombre d'itérations est fonction de la sélectivité en fréquence du filtre ;
- le filtre effectue un filtrage de détection spatiale ponctuelle avant le filtrage par le filtre morphologique non linéaire ;
- le filtre effectue un filtrage antidistorsion de repliement avant le filtrage par le filtre morphologique non linéaire ;
- la détermination du spectre spatio-temporel se fait pour chaque signal issu d'un pixel du système optronique ;
- l'objet est un missile sol-air à très courte portée éjecté à partir d'un dispositif d'éjection ;
- le système optronique est monté sur un véhicule ;
- un volume de données composant le signal pour la détermination du spectre spatio-temporel est fonction de la vitesse du véhicule dans un repère terrestre ; et
- le volume de données est proportionnel à la racine cubique de la vitesse du véhicule dans un repère terrestre.

L'invention concerne également un dispositif de détection mettant en oeuvre le procédé.

L'invention présente de nombreux avantages.

La technique de détection selon l'invention détecte notamment la phase 1 d'éjection, qui est un événement bref (de l'ordre de 50 ms) et limité dans l'espace. Il s'agit donc d'un événement de haute fréquence du point de vue spatio-temporel. Cette stratégie de détection de l'éjection (ou « early-warning » selon la terminologie anglo-saxonne généralement utilisée par l'homme du métier) permet de gagner un temps précieux, et de déclencher plus rapidement les dispositifs de contre-mesure de l'avion. La sécurité de l'avion est donc grandement augmentée.

La détection de l'objet s'opère sur tous types de fonds, à savoir des fonds uniformes de type « ciel clair », des fonds de ciel structurés ou nuageux, ou des fonds de sols urbains, ruraux ou naturels.

La technique de détection selon l'invention a un taux de fausses alarmes faible.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un véhicule du type avion comportant un système optronique dans le champ duquel est situé un dispositif d'éjection d'objet ;
- la figure 2, déjà commentée, représente schématiquement un profil temporel de l'émission infrarouge d'un missile ;
- les figures 3 et 4 représentent schématiquement un spectre spatio-temporel d'une image acquise par un système optronique et un spectre spatio-temporel d'une séquence d'images en une dimension acquises par un système optronique ;
- les figures 5 et 6 représentent schématiquement un spectre spatio-temporel d'une éjection d'un missile acquise par un système optronique ;
- la figure 7 représente schématiquement des zones de recherche dans un spectre spatio-temporel regroupant les spectres des figures 4 et 6 ;
- la figure 8 est un équivalent de la figure 7 avec plusieurs vitesses de défilement du système optronique ;
- les figures 9 et 10 représentent schématiquement un spectre spatio-temporel d'une éjection d'un missile dans différents cas d'échantillonnage du signal ;
- la figure 11 montre l'évolution d'un spectre spatio-temporel d'une éjection d'un missile en fonction de la vitesse de défilement du système optronique ;
- la figure 12 représente schématiquement les étapes principales d'un procédé selon l'invention ;
- la figure 13A représente schématiquement une partie d'un domaine spatio-temporel détecté avec une éjection d'un missile et un point fixe sans appliquer un procédé selon l'invention ;
- la figure 13B représente schématiquement une partie d'un domaine spatio-temporel détecté avec une éjection d'un missile et deux points mobiles sans appliquer un procédé selon l'invention ; et
- la figure 14 représente schématiquement le domaine de la figure 13B en appliquant un procédé selon l'invention. Dans l'ensemble des figures, les éléments similaires portent des références numériques identiques.

DESCRIPTION DETAILLEE

La présente description s'applique avantageusement à un exemple selon la figure 1, à savoir la détection d'un missile 15 pour l'autoprotection d'un avion 10 de transport ou de chasse. Le missile 15 est bien entendu situé dans un champ optique 16 d'un système optronique 11 monté sur l'avion 10. La présente invention s'applique très avantageusement à un missile 15 sol-air à très courte portée tiré à partir d'un dispositif d'émission 14 transporté par un fantassin 13.

On comprend cependant que l'invention s'applique également à toute technique de détection d'un objet situé dans un champ optique d'un système optronique, monté sur un véhicule ou un immeuble.

Un dispositif de détection selon l'invention comporte principalement le système optronique 11.

Le système optronique 11 est un imageur, composé d'une optique 112 et d'un détecteur matriciel 111.

Le champ 16 de l'optique 112 est le plus grand possible, préférentiellement supérieur à $2\pi$ stéradian (sr).

Le détecteur matriciel 111 comporte une matrice présentant classiquement un ensemble de pixels de détection.

Le dispositif de détection comporte de plus des moyens de traitement 12 aptes à déterminer un spectre spatio-temporel à partir d'un signal issu du système optronique 11. Une telle étape de détermination est décrite plus en détail dans la suite de la présente description.

Il comporte de plus un filtre spatio-temporel 17 apte à filtrer le spectre spatio-temporel. Une telle étape de filtrage est décrite plus en détail dans la suite de la présente description.

Il comporte en outre des moyens de détection 18 aptes à détecter des zones d'alarmes dont une magnitude de spectre est supérieure à un seuil prédéterminé, ces zones alarmes correspondant à une éjection possible de l'objet. Une telle étape de détection est décrite plus en détail dans la suite de la présente description.

Lors d'une première étape principale, le système optronique 11 acquiert une séquence d'images. Les images sont prises dans le champ optique 16 du système optronique 11.

Lors d'une deuxième étape principale, les moyens de traitement 12 déterminent un spectre spatio-temporel à partir d'un signal issu du système optronique 11 et représentant la séquence d'images.

On explique ici pour des raisons de clarté la détermination du spectre spatio-temporel pour des images à une dimension, à savoir un signal issu d'un pixel du système optronique 11. On comprend que la détermination du spectre spatio-temporel se fait en pratique pour chaque signal issu d'un pixel du système optronique 11.

Le calcul suivant établit le spectre spatio-temporel d'une séquence d'images S, obtenue par translation d'une même image 1 D de position r au cours du temps t, à la vitesse v.

$$S(\vec{r}, t) = I(\vec{r} - \vec{v} \cdot t)$$

où I est une image définie par le niveau électrique issu du détecteur (dans le plan des réels $\mathfrak{R}^2$ ), et où r est le vecteur position dans le détecteur supposé fixe, et où v est le vecteur vitesse de défilement de l'image dans le référentiel du détecteur, résultant du mouvement du porteur du détecteur.

Cette équation suppose qu'il existe une échelle suffisamment petite pour que la vitesse v puisse être considérée comme uniforme, et suffisamment grande pour que le déplacement entre deux images soit petit devant cette échelle (pour limiter les effets de bord).

La transformation de Fourier de S s'écrit ;

$$\hat{S}(\vec{k}, \omega) = \iiint I(\vec{r} - \vec{v} \cdot t) \cdot e^{-i \cdot \vec{k} \cdot \vec{r}} \cdot e^{-i \cdot \omega \cdot t} \cdot d^2 r \cdot dt$$

Le changement de variable $(\vec{r}, t) \mapsto (\vec{u}, t) = (\vec{r} - \vec{v} \cdot t, t)$ donne :

$$\hat{S}(\vec{k}, \omega) = \iiint I(\vec{u}) \cdot e^{-i \cdot \vec{k} \cdot \vec{u}} \cdot e^{-i \cdot (\omega + \vec{k} \cdot \vec{v}) t} \cdot d^2 \vec{u} \cdot dt$$

On obtient finalement : $\boxed{\hat{S}(\vec{k}, \omega) = \delta(\omega + \vec{k} \cdot \vec{v}) \cdot \hat{I}(\vec{k})}$

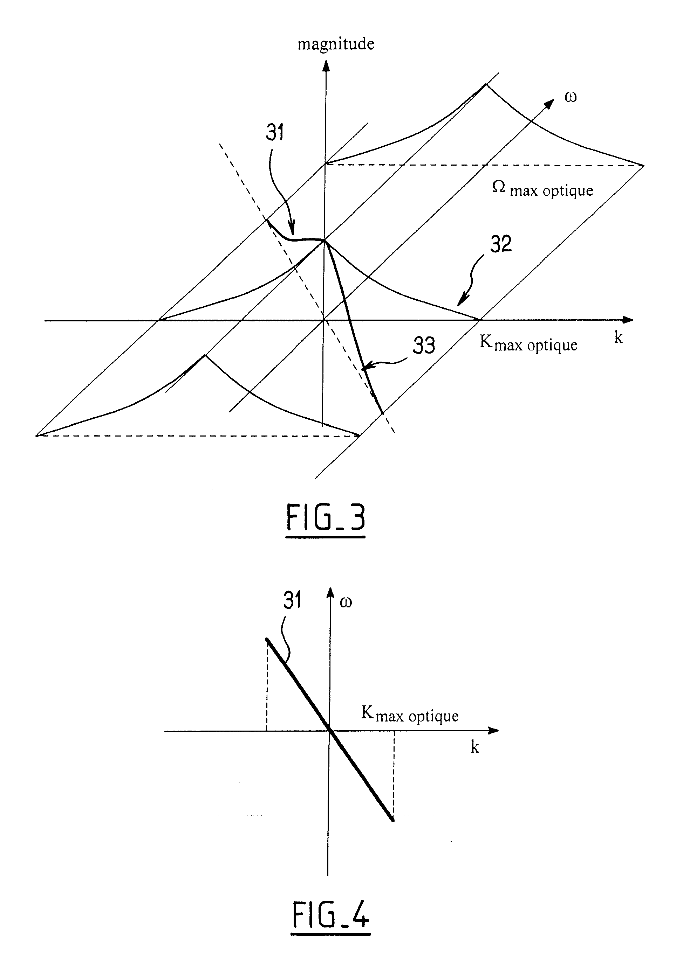

Les figures 3 et 4 (la figure 4 étant une projection de la figure 3 dans le plan $(\vec{k}, \omega)$) montrent que le spectre 31 obtenu pour la séquence S est donc non nul en magnitude (la magnitude est le troisième axe du repère et est perpendiculaire au plan $(\vec{k}, \omega)$) seulement le long d'une droite 33 de pente -v dans le plan $(\vec{k}, \omega)$.

L'enveloppe en magnitude est définie par le spectre 32 de l'image à une dimension pris en la valeur (ω/v) (à savoir l'image du spectre par une affinité). Le spectre 32 est nul sur les points de la droite situés au delà du point (Ω$_{max\ optique}$, K$_{max\ optique}$) où K$_{max\ optique}$ est la fréquence de coupure de l'optique du système optronique et Ω$_{max\ optique}$ est égale à v multipliée par K$_{max\ optique}$.

Par ailleurs, l'éjection 1 du missile 15 est un signal de courte durée qui est, bien que ce ne soit pas tout à fait exact, supposé être entraîné par le mouvement du fond de scène.

Cette durée brève conduit à un élargissement du spectre temporel de ce signal. L'émission radiométrique du missile 15 peut être modélisée par l'équation :

$$I = I_0(x, y) \times f(t)$$

où I$_0$ est une fonction dans le plan des réels $\mathfrak{R}^2$ décrivant la tache optique, c'est à dire la fonction obtenue à partir du détecteur de l'image lorsque le système observe un point à l'infini ;

et où f(t) est le profil temporel de l'émission (fonction du temps t), c'est à dire une fonction positive qui vaut 0 avant le tir du missile et 1 lorsque celui-ci est le plus visible.

x et y désignent les coordonnées dans le détecteur supposé fixe.

Il est possible d'écrire :

$$S_0(\vec{r}, t) = f(t) \cdot I_0(\vec{r} - \vec{v} \cdot t)$$

Le calcul de la transformée de Fourier donne :

$$\hat{S}_0(\vec{k}, \omega) = \iiint f(t) \cdot I_0(\vec{r} - \vec{v} \cdot t) \cdot e^{-i \cdot \vec{k} \cdot \vec{r}} \cdot e^{-i \cdot \omega \cdot t} \cdot d^2 r \cdot dt$$

Le changement de variable $(\vec{r}, t) \mapsto (\vec{u}, t) = (\vec{r} - \vec{v} \cdot t, t)$ donne :

$$\hat{S}_0(\vec{k}, \omega) = \iiint f(t) \cdot I_0(\vec{u}) \cdot e^{-i \cdot \vec{k} \cdot \vec{u}} \cdot e^{-i \cdot (\omega + \vec{k} \cdot \vec{v}) t} \cdot d^2 \vec{u} \cdot dt$$

Finalement, on obtient :

$$\boxed{\hat{S}_0(\vec{k}, \omega) = \hat{f}(\omega + \vec{k} \cdot \vec{v}) \cdot \hat{I}_0(\vec{k})}.$$

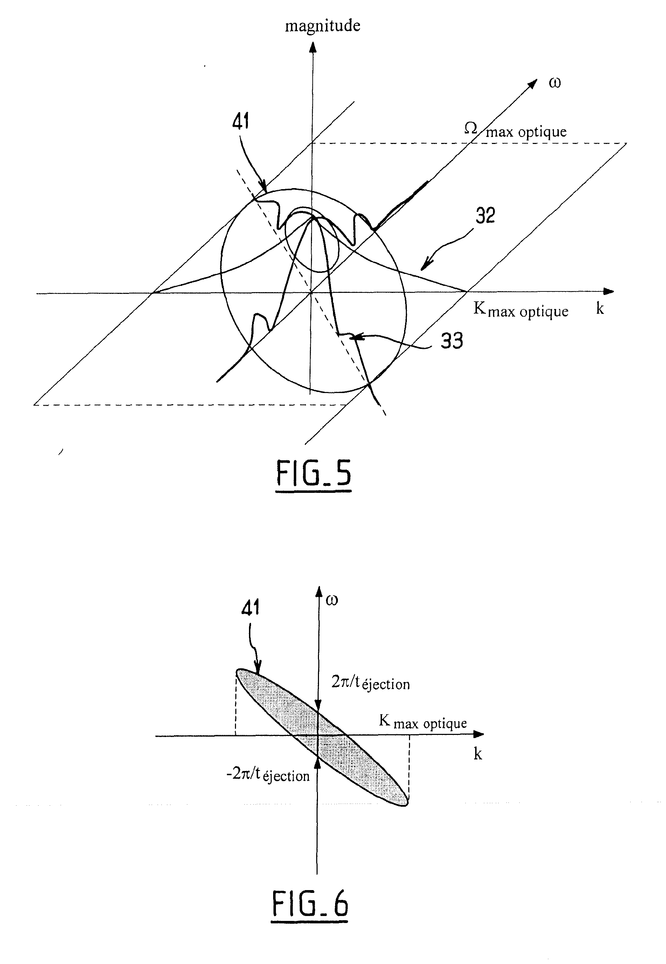

Comme le montrent les figures 5 et 6 (de même que précédemment, la figure 6 est une projection de la figure 5 dans le plan $(\vec{k}, \omega)$), contrairement au signal issu du fond, le signal provenant de l'éjection du missile 15 présente un spectre 41 qui est étendu dans l'espace des fréquences ω.

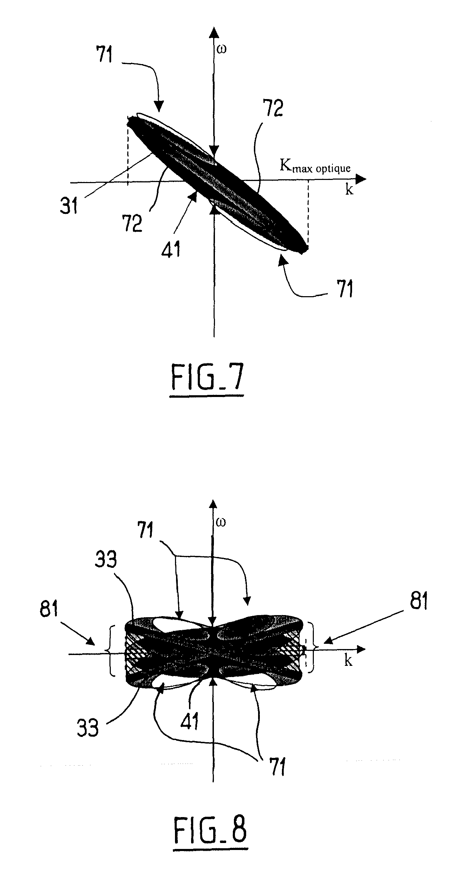

La figure 7 représente une mise en correspondance du spectre de la figure 4 et du spectre de la figure 6.

La mise en correspondance de la figure 7 permet de montrer que le filtre 17 crée, lors d'une troisième étape principale, des zones de recherche 71 dans le spectre spatio-temporel déterminé, pour éliminer les basses fréquences spatiales et les basses fréquences temporelles. Le filtre peut ainsi éliminer notamment la zone correspondant à un spectre 31 du signal issu du fond du paysage en défilement. Il n'est pas possible de détecter une éjection dans la zone du spectre correspondant à la droite 33 ou le spectre 31, car il y aurait un nombre de fausses alarmes trop important.

Les zones de recherche 71 correspondent aux fréquences qui ont les valeurs absolues les plus élevées.

Les zones 72 correspondant aux zones du spectre 41 d'où a été soustrait le spectre 31 - fréquences de valeur absolue intermédiaire - ne sont pas choisies pour la détection. Dans la pratique en effet, il y a dans une séquence d'images, non pas une seule vitesse v, mais un ensemble de vitesses. Dans le champ 16 du système optique 11, les vitesses peuvent prendre un grand nombre de valeurs. Ce phénomène est particulièrement vrai dans le cas des images grands champs 16.

La figure 8 montre un spectre (toujours dans le cas à une dimension) pour plusieurs vitesses. On constate que seules les zones de recherche 71 correspondant à des fréquences supérieures aux droites 33 (ces droites 33 étant des cônes dans le cas général) d'équations :

$$|\omega| = |\vec{k} \cdot \vec{v}_{\max}|$$

permettent de détecter le signal d'éjection dans tous les cas de figure. Les zones 81 correspondent à des zones mixtes où le paysage et l'éjection sont superposés.

C'est donc le module de la vitesse maximale qui est la grandeur dimensionnante du filtre, notamment dans le cas où l'on souhaite n'utiliser qu'un seul et même filtre pour toutes les vitesses de l'image.

Toutefois l'estimation de la vitesse maximale peut être variable en fonction de la position dans l'image, et être plus ou moins précise si, par exemple, il est possible de connaître le mouvement du porteur, et de tenir compte de cette connaissance pour estimer les mouvements dans l'image.

Les développements qui précèdent s'appliquent à un domaine continu, spatialement et temporellement.

Les développements qui suivent visent à décrire les effets de l'échantillonnage dans ces deux dimensions.

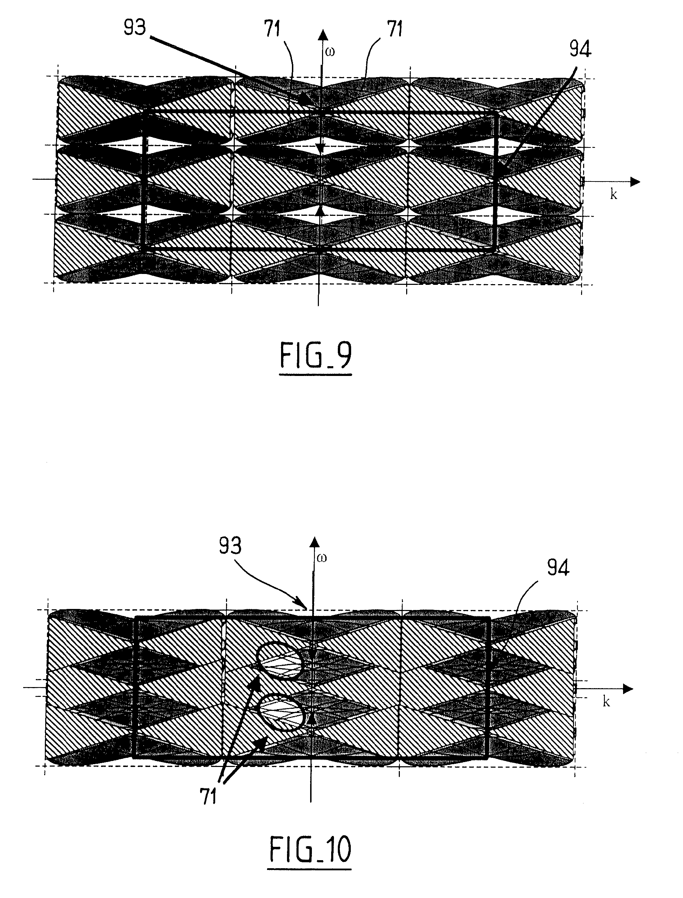

La figure 9 montre un spectre, toujours dans le cas 1 D spatiale, issu d'un échantillonnage vérifiant, dans l'espace et le temps, les conditions de Shannon. La référence 93 montre la pulsation d'échantillonnage temporel et la référence 94 montre la pulsation d'échantillonnage spatial. On constate qu'on peut déterminer comme précédemment des zones de recherche 71.

Dans, la pratique, l'échantillonnage spatial reste invariable. Par contre, la qualité de l'échantillonnage temporel est directement liée à la vitesse de défilement maximale observée dans l'image.

La figure 10 montre un spectre, toujours dans le cas 1 D spatiale, issu d'un échantillonnage vérifiant les conditions de Shannon dans l'espace, mais ne les vérifiant pas dans le temps. On constate donc classiquement un repliement du spectre en fréquences. Les zones de recherche 71 sont réduites et décalées vers les basses fréquences. La conséquence du repliement spectral est donc de diminuer la surface des zones de recherche.

Il faut par conséquent un filtre 17 plus sélectif en fréquence. La réponse impulsionnelle du filtre est alors moins bien localisée.

Ceci nous amène donc à considérer la résolution en fréquence du filtre 17.

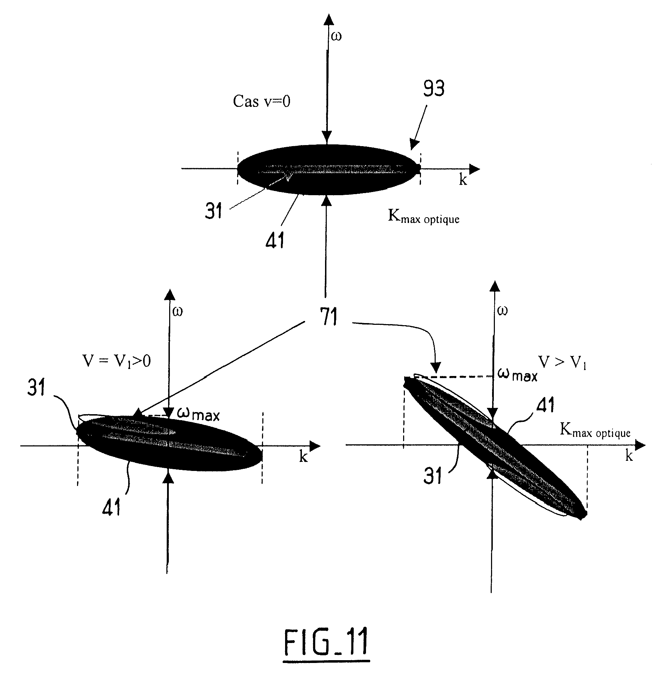

La résolution en fréquence est directement liée à la dimension de la portion spatio-temporelle considérée pour la détection. Comme le montre la figure 11, lorsque la vitesse v de défilement augmente, la surface du spectre 41 correspondant au signal à détecter diminue.

Il apparaît sur la figure 11 que la surface accessible dans le plan $\left(\vec{k}, \omega\right)$ pour la détection (il s'agira bien entendu d'un volume dans le cas général à deux dimensions spatiales) diminue lorsque la vitesse V augmente.

Pour une détection efficace, il faut donc une résolution spatio-temporelle d'autant plus fine que la vitesse est élevée. Dans le cas général on peut évaluer le volume Vol de l'ellipsoïde du spectre 41 dans le plan $\left(\vec{k}, \omega\right)$ par :

$$Vol = \pi \cdot K_{\max}^{2} \cdot \omega_{\max} \cdot \cos(\arctan V)$$

ce qui se simplifie en

$$Vol = \frac{\pi \cdot K_{max}^{2} \cdot \omega_{max}}{\sqrt{1+V^{2}}}.$$

Or cette résolution est donnée par l'inverse d'une dimension $\varnothing$ typique du volume de données utilisées pour appliquer la détection. La dimension $\varnothing$ est proportionnelle à $Vol^{1/3}$.

Pour maintenir des performances comparables lorsque V varie, il faudrait donc que la dimension $\varnothing$ varie en sens contraire des dimensions caractéristiques des dimensions du volume Vol calculé plus haut à savoir :

$$\phi \propto \frac{\left(1+V^{2}\right)^{1/6}}{\left(\pi \cdot K_{max}^{2} \cdot \omega_{max}\right)^{1/3}}.$$

La dimension typique $\varnothing$ du volume de donnée nécessaire pour conserver une qualité de détection varie donc comme $V^{1/3}$. En conséquence, les dimensions de la réponse impulsionnelle associée du filtre suivent la même évolution.

Les développements qui précèdent s'attachent à la création des zones de recherche 71.

Lors d'une quatrième étape principale, les moyens de détection 18 détectent dans les zones de recherche 71 des zones d'alarmes dont une magnitude de spectre est supérieure à un seuil prédéterminé. Ces zones alarmes correspondant à une éjection possible de l'objet.

Le dispositif de détection peut donc alors donner une instruction pour le déclenchement des dispositifs de contre-mesure.

Les développements qui suivent s'attachent à un mode de mise en oeuvre d'un procédé selon l'invention.

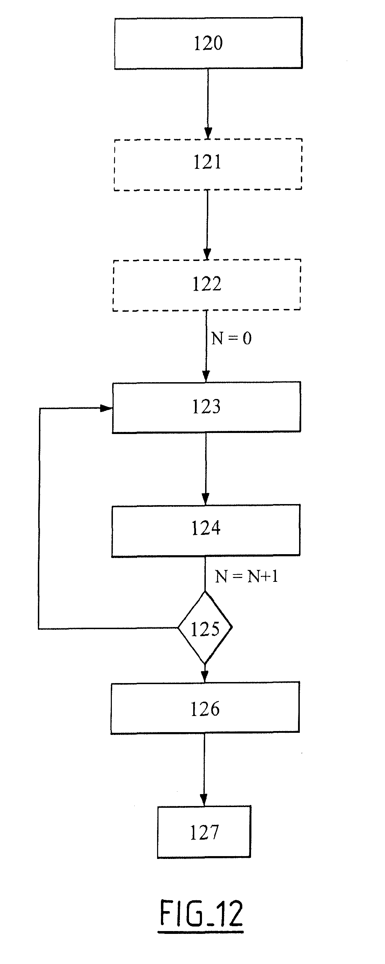

La figure 12 représente schématiquement les étapes principales d'un tel procédé selon l'invention.

Lors d'une étape 120, le système optronique 11 acquiert une séquence d'images. Les images sont prises dans le champ optique 16 du système optronique 11. Le spectre spatio-temporel 120 est déterminé lors de l'étape 120.

Lors d'une étape 121, optionnelle, le filtre 17 effectue un filtrage de détection spatiale ponctuelle. L'étape 122 est avantageusement mise en oeuvre pour éliminer les objets manifestement trop volumineux pour être des missiles 15.

Lors d'une étape 122, optionnelle également, le filtre 17 effectue un filtrage antidistorsion de repliement. L'étape 122 est avantageusement mise en oeuvre dans des conditions de sous-échantillonnage.

Un compteur N est ensuite mis à zéro.

Lors d'une étape 123, le filtre 17 crée des zones de recherche 71 dans le spectre spatio-temporel 41 en effectuant tout d'abord un filtrage par un filtre morphologique non linéaire. Ce filtre correspond à un filtrage de détection temporelle ponctuelle. Ce filtrage diminue le niveau du signal issu du fond de scène, mais pas celui provenant de l'éjection.

Lors d'une étape 124, le filtre 17 effectue ensuite un filtrage du signal issu du filtre morphologique non linéaire par un filtre spatial passe-bas. Ce filtre correspond à un grossissement de pixel. Le fait de grossir la taille du pixel permet de diminuer la proportion de signal hautes fréquences dans le signal sortant du pixel. Ce filtre est avantageusement mis en oeuvre dans les cas où les conditions de faible défilement de la scène ne sont pas réunies.

A l'issue de l'étape 124, le compteur N est incrémenté d'un incrément.

Lors d'une étape 125, le filtre détermine si la valeur du compteur est inférieure à une valeur maximale Nmax.

Si la réponse est oui, alors le filtre 17 retourne à l'étape 123 déjà décrite. Si la réponse est non, le filtre passe alors à une étape 126.

On comprend que l'étape 123 et l'étape 124 peuvent être itérées une pluralité de fois. Le nombre d'itérations et le nombre Nmax sont liés à la sélectivité en fréquence du filtre. Plus la vitesse de défilement est importante, plus le filtre doit être sélectif, notamment en fréquence, et plus le nombre d'itérations doit être important. En contrepartie, plus le nombre d'itérations est important, plus la dimension de la réponse du filtre est importante également. Le filtre est d'autant moins localisé qu'il y a d'itérations.

Lors de l'étape 126, le filtre 17 effectue enfin un filtrage du signal issu du filtre spatial passe-bas par un filtre morphologique non linéaire. En effet, lors de l'étape 124, il est possible qu'une partie basse fréquence temporelle soit apparue. Il est alors utile de réappliquer le traitement temporel pour ne sélectionner que les composantes vraisemblables du signal. En effet, les basses fréquences temporelles ne sauraient provenir d'une éjection, dont la durée est brève, quelle que soit l'échelle spatiale à laquelle elle est considérée.

Lors d'une étape 127, les moyens de détection 18 détectent des signaux d'alarmes dont une magnitude est supérieure à un seuil prédéterminé. Ces zones alarmes correspondant à une éjection possible de l'objet. On fixe la valeur du seuil en fonction du taux de fausses alarmes que l'on veut obtenir.

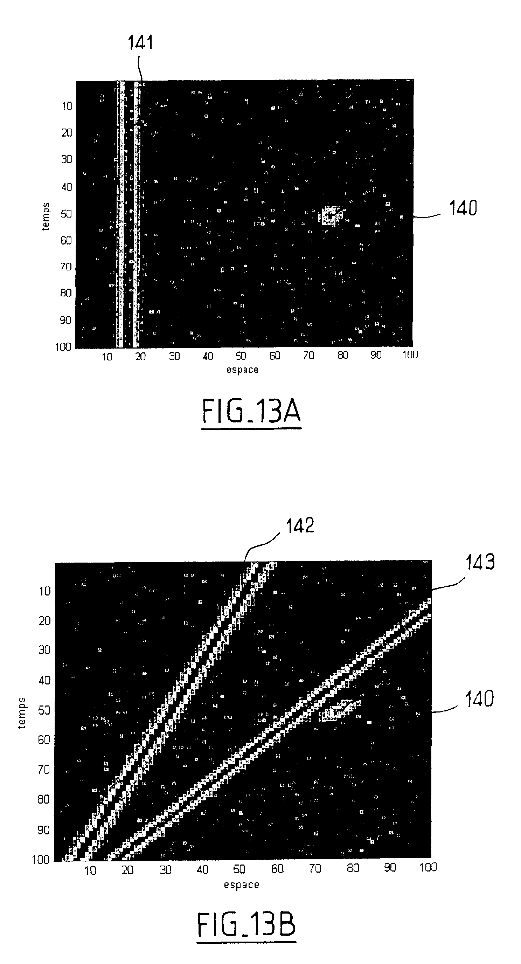

La figure 13A représente schématiquement une partie d'un domaine spatio-temporel détecté avec une éjection 140 d'un missile et un point fixe 141 sans appliquer un procédé selon l'invention.

La figure 13B représente schématiquement une partie d'un domaine spatio-temporel détecté avec une éjection 140 d'un missile et deux points 142 et 143 mobiles sans appliquer un procédé selon l'invention.

Dans les cas des figures 13A et 13B, le dispositif de détection ne détecte pas l'éjection 140 de l'objet, à causes de la détection également des autres points 141, 142 et 143. Il y a indifférenciation entre les phénomènes.

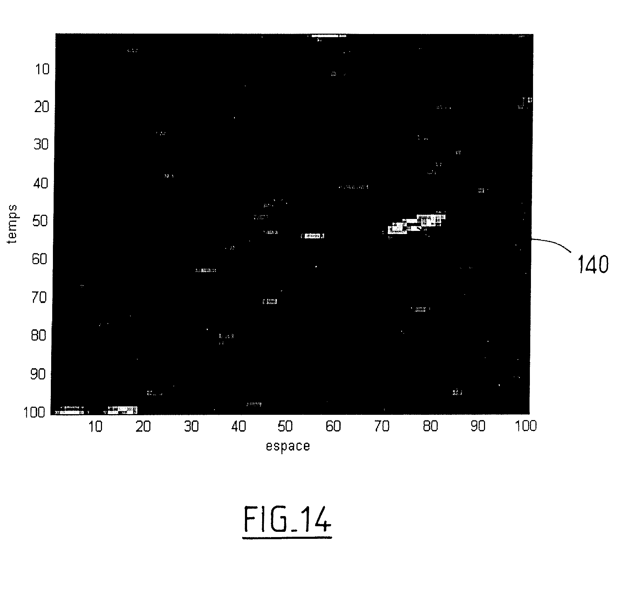

La figure 14 représente schématiquement le domaine de la figure 13B en appliquant un procédé selon l'invention.

Pour l'application du procédé, le filtre ponctuel spatial de l'étape 121 est le laplacien de la tache optique correspondant à un pixel, cette tache étant une gaussienne. L'élément structurant du filtre morphologique non linéaire de l'étape 123 est d'une durée de cinq échantillons. Le filtre passe-bas de l'étape 124 est une fonction constante égale à 1 sur sept pixels. Le paramètre Nmax est fixé à 2, il y a donc trois filtres morphologiques non linéaires temporels.

Dans ce cas, l'éjection de l'objet est bien détectée par le dispositif, puisque les autres phénomènes ne sont plus eux détectés. On a donc un taux de fausses alarmes faible.

## Revendications

1. Procédé de détection d'un objet (15) situé dans un champ optique (16) d'un système optronique (11), **caractérisé en ce qu'**il comporte les étapes selon lesquelles :

   - des moyens de traitement (12) déterminent un spectre spatio-temporel (41) à partir d'un signal issu du système optronique (11) ;
   - un filtre spatio-temporel (17) crée des zones de recherche (71) dans le spectre spatio-temporel (41) pour éliminer les basses fréquences spatiales et les basses fréquences temporelles et ;
   - des moyens de détection (18) détectent dans les zones de recherche (71) des zones d'alarmes dont une magnitude de spectre est supérieure à un seuil prédéterminé, ces zones d'alarmes correspondant à une détection possible de l'objet (15).

2. Procédé selon la revendication précédente, dans lequel le filtre (17) spatio-temporel crée des zones de recherche (71) dans le spectre spatio-temporel (41) en effectuant les étapes suivantes :

   - un filtrage (123) d'un signal issu du système optronique (11) par un filtre morphologique non linéaire ;
   - un filtrage (124) du signal issu du filtre morphologique non linéaire par un filtre spatial passe-bas ;
   - un filtrage (126) du signal issu du filtre spatial passe-bas par un filtre morphologique non linéaire.

3. Procédé selon la revendication précédente, dans lequel l'étape de filtrage (123) du signal issu du système optronique (11) par le filtre morphologique non linéaire et l'étape de filtrage (124) du signal issu du filtre morphologique non linéaire par le filtre spatial passe-bas sont itérées une pluralité de fois.

4. Procédé selon la revendication précédente, dans lequel le nombre d'itérations est fonction de la sélectivité en fréquence du filtre (17).

5. Procédé selon l'une des revendications 2 à 4, dans lequel le filtre effectue un filtrage (121) de détection spatiale ponctuelle avant le filtrage par le filtre morphologique non linéaire.

6. Procédé selon l'une des revendications 2 à 5, dans lequel le filtre effectue un filtrage (122) antidistorsion de repliement avant le filtrage par le filtre morphologique non linéaire.

7. Procédé selon l'une des revendications 2 à 6, dans lequel la détermination du spectre spatio-temporel se fait pour chaque signal issu d'un pixel du système optronique (11).

8. Procédé selon l'une des revendications précédentes, dans lequel l'objet est un missile (15) sol-air à très courte portée éjecté à partir d'un dispositif d'éjection (14).

9. Procédé selon l'une des revendications précédentes, dans lequel le système optronique (11) est monté sur un véhicule (10).

**10.** Procédé selon la revendication précédente, dans lequel un volume de données ($\varnothing$) composant le signal pour la détermination du spectre spatio-temporel est fonction de la vitesse (V) du véhicule dans un repère terrestre.

**11.** Procédé selon la revendication précédente, dans lequel le volume de données ($\varnothing$) est proportionnel à la racine cubique de la vitesse ($V^{1/3}$) du véhicule dans un repère terrestre.

**12.** Dispositif de détection d'un objet (15), comportant un système optronique (11), l'objet (15) étant situé dans un champ optique (16) du système optronique, **caractérisé en ce qu'**il comporte :

- des moyens de traitement (12) aptes à déterminer un spectre spatio-temporel (41) à partir d'un signal issu du système optronique (11);
- un filtre spatio-temporel (17) apte à créer des zones de recherche (71) dans le spectre spatio-temporel (41) pour éliminer les basses fréquences spatiales et les basses fréquences temporelles et ;
- des moyens de détection (18) aptes à détecter dans les zones de recherche (71) des zones d'alarmes dont une magnitude de spectre est supérieure à un seuil prédéterminé, ces zones alarmes correspondant à une détection possible de l'objet (15).

FIG_1

1.éjection

2.vol balistique

3.mise à feu

4.croisière

Intensité IR

t

FIG_2

FIG_3

FIG_4

magnitude

ω

41

Ω max optique

32

K max optique    k

33

## FIG. 5

41

ω

$2\pi/t_{éjection}$

K max optique

k

$-2\pi/t_{éjection}$

## FIG. 6

FIG.7

FIG.8

FIG_9

FIG_10

Cas v=0

**93**

$\omega$

**31**

**41**

k

$K_{max\ optique}$

**71**

$V = V_1 > 0$

**31**

$\omega$

$\omega_{max}$

**41**

k

$V > V_1$

$\omega$

$\omega_{max}$

**41**

**31**

$K_{max\ optique}$

k

# FIG_11

```
            ┌──────────────────┐
            │       120        │
            └──────────────────┘
                     │
                     ▼
            ┌ ─ ─ ─ ─ ─ ─ ─ ─ ┐
                    121
            └ ─ ─ ─ ─ ─ ─ ─ ─ ┘
                     │
                     ▼
            ┌ ─ ─ ─ ─ ─ ─ ─ ─ ┐
                    122
            └ ─ ─ ─ ─ ─ ─ ─ ─ ┘
                     │  N = 0
                     ▼
            ┌──────────────────┐
      ┌────▶│       123        │
      │     └──────────────────┘
      │              │
      │              ▼
      │     ┌──────────────────┐
      │     │       124        │
      │     └──────────────────┘
      │              │  N = N+1
      │              ▼
      │           ╱──────╲
      └──────────│  125   │
                  ╲──────╱
                     │
                     ▼
            ┌──────────────────┐
            │       126        │
            └──────────────────┘
                     │
                     ▼
            ┌──────────────────┐
            │       127        │
            └──────────────────┘
```

FIG.12

FIG.13A

FIG.13B

FIG.14

Office européen
des brevets

**RAPPORT DE RECHERCHE EUROPEENNE**

Numéro de la demande

EP 06 12 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 241 374 A (THOMSON-CSF) 14 octobre 1987 (1987-10-14) * abrégé * | 1,12 | INV. G01S3/786 F41G7/22 F41G3/14 |
| A | * page 3, colonne 4, ligne 36 - page 6, colonne 9, ligne 12; figures 1-8 * | 2-8 | |
| X | FR 2 660 998 A (THOMSON TRT DEFENSE) 18 octobre 1991 (1991-10-18) * abrégé * | 1,12 | |
| A | * page 3, ligne 18 - page 8, ligne 28; figures 1-5 * | 2-9 | |
| X | FR 2 536 534 A (ETAT FRANCAIS DELEGUE ARMEMENT) 25 mai 1984 (1984-05-25) * abrégé * | 1,12 | |
| A | * page 3, ligne 28 - page 6, ligne 5; figures 1-13 * | 2-7 | |
| X | DE 30 14 906 C1 (ELTRO GMBH, GESELLSCHAFT FUER STRAHLUNGSTECHNIK, 6900 HEIDELBERG, DE) 8 octobre 1981 (1981-10-08) | 1,12 | DOMAINES TECHNIQUES RECHERCHES (IPC) |
| A | * colonne 3, ligne 63 - colonne 8, ligne 6; figures 1-7 * | 2-8 | G01S F41G |
| X | FR 2 465 188 A (TELECOMMUNICAT RADIOELECT TELEPH) 20 mars 1981 (1981-03-20) | 1,12 | |
| A | * page 2, ligne 35 - page 7, ligne 29; figures 1-5 * | 2-9 | |
| A | FR 2 736 742 A (THOMSON CSF) 17 janvier 1997 (1997-01-17) * abrégé * * page 3, ligne 30 - page 8, ligne 4; figures 1-6 * | 1,12 | |

-/--

Le présent rapport a été établi pour toutes les revendications

| Lieu de la recherche | Date d'achèvement de la recherche | Examinateur |
|---|---|---|
| La Haye | 28 février 2007 | Blondel, François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 06 12 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 4 937 878 A (LO ET AL) 26 juin 1990 (1990-06-26) * abrégé * * colonne 2, ligne 14 - colonne 6, ligne 32; figures 1-3 * ----- | 1,12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 28 février 2007 | Blondel, François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 12 0017

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-02-2007

| Document brevet cité au rapport de recherche | | Date de publication | Membre(s) de la famille de brevet(s) | | Date de publication |
|---|---|---|---|---|---|
| EP 0241374 | A | 14-10-1987 | DE | 3765678 D1 | 29-11-1990 |
| | | | FR | 2597201 A1 | 16-10-1987 |
| | | | US | 4849620 A | 18-07-1989 |
| FR 2660998 | A | 18-10-1991 | DE | 3122101 C1 | 24-10-1991 |
| | | | GB | 2243509 A | 30-10-1991 |
| | | | US | 5212384 A | 18-05-1993 |
| FR 2536534 | A | 25-05-1984 | BE | 878934 A1 | 13-02-1984 |
| DE 3014906 | C1 | 08-10-1981 | AUCUN | | |
| FR 2465188 | A | 20-03-1981 | GB | 2087185 A | 19-05-1982 |
| | | | NL | 8005994 A | 01-06-1982 |
| | | | SE | 451347 B | 28-09-1987 |
| | | | SE | 8007747 A | 06-05-1982 |
| | | | US | 4397429 A | 09-08-1983 |
| FR 2736742 | A | 17-01-1997 | AUCUN | | |
| US 4937878 | A | 26-06-1990 | AU | 619611 B2 | 30-01-1992 |
| | | | AU | 4400589 A | 05-03-1990 |
| | | | CA | 1313704 C | 16-02-1993 |
| | | | DE | 68910498 D1 | 09-12-1993 |
| | | | DE | 68910498 T2 | 03-03-1994 |
| | | | EP | 0380658 A1 | 08-08-1990 |
| | | | ES | 2016049 A6 | 01-10-1990 |
| | | | IL | 90898 A | 04-04-1993 |
| | | | JP | 6064613 B | 22-08-1994 |
| | | | JP | 3502018 T | 09-05-1991 |
| | | | TR | 25266 A | 04-12-1992 |
| | | | WO | 9001706 A2 | 22-02-1990 |

EPO FORM P0460

Pour tout renseignement concernant cette annexe : voir Journal Officiel de l'Office européen des brevets, No.12/82